# EUROPEAN PATENT APPLICATION

(11) **EP 0 635 647 A1**
(43) Date of publication of application: **25.01.1995**
(21) Application number: 94304443.8
(22) Date of filing: 20.06.1994
(51) Int. Cl.: F16B 19/10, B21J 15/36

(54) **A mandrel for blind rivets and an apparatus for manufacturing the mandrel**

(30) Priority: 22.06.1993 JP 176017/93
(71) Applicant: YUGENKAISHA SHINJO SEISAKUSHO, Osaka (JP)
(72) Inventor: Shinjo, Katsumi, Osaka (JP)
(74) Representative: Purvis, William Michael Cameron

(57) **Abstract**

A mandrel (15) inserted in a rivet body (11) to form a blind rivet (10) has a head (17) extending from a rod-shaped mandrel body (16). The head (17) is formed to have a plane top surface (18) perpendicular to the mandrel body, has a diameter 'D' almost equal to the outer diameter of rivet body, and a height 'H' of 80% - 120% of the mandrel body's diameter 'd'. A frustum-shaped low protrusion (19) formed centrally of and on the top surface has an upper surface (20) of a diameter 'd1' slightly greater than the diameter 'd'. A conical or otherwise curved surface (21) of the mandrel head applies a force to an open end (11a) of the rivet body (11) in a self-centering manner when force is imparted to the mandrel body (16) to caulk or deform the open end (11a), so that a uniform caulking is effected, with the head being retained not to slip off the caulked rivet body (11) whose length is noticeably reduced. Apparatus is also disclosed which, if installed in a nailery machine, enables the easy production of the mandrel (15) in the same manner as the prior art mandrels.

## Description

The invention relates to a mandrel for use with blind rivets, and also relates to an apparatus for automatically manufacturing the mandrel.

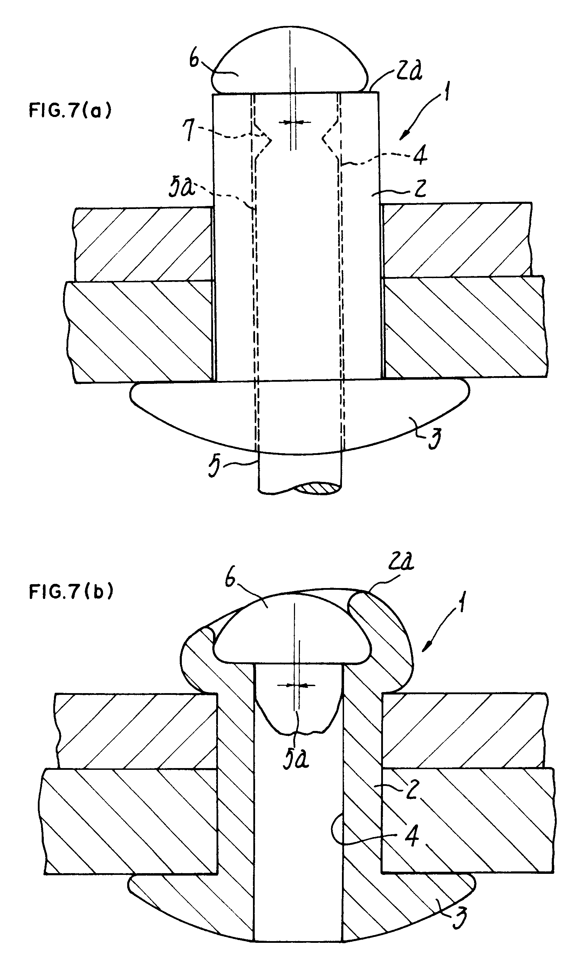

Figures 7(a) and 7(b) of the accompanying drawings show a typical example of a prior art blind rivet which comprises a cylindrical rivet body 2 and a mandrel 5, the rivet body having at one end thereof a flange-shaped rivet head 3. A bore 4 open through the rivet body receives the mandrel 5, which has a mandrel head 6 and a constricted portion 7. The mandrel head 6 and constricted portion 7 are located opposite to said one end of the rivet body 2, and thus opposite to the rivet head 3. The mandrel head 6 plastically deforms and expands the other, open end of the rivet body. A mandrel body will subsequently be broken off the mandrel head 6, at its constricted portion 7.

Such mandrels 5 for blind rivets are made of an iron rod inexpensively by using in general a nail manufacturing apparatus. The round mandrel heads 6 are formed in a one-shot manner by a punching press, so that they sometimes are somewhat offset with respect to the axis of the mandrel body 5a. Further, a peripheral portion of the mandrel head is likely to be uneven in its thickness and/or shape around the axis of the mandrel body. If, in use, such an irregularly formed head 6 of the mandrel 5 presses or expands the open end 2a of the rivet body 2, then the open end 2a will not be deformed uniform as shown in Figures 7(b). Consequently, the mandrel head 6 will tend to slip off the rivet body, or the rivet body 2 will collapse during the riveting operation, and/or the rivet as a whole will fail to achieve an expected strength of connection, due to such an irregular deformation.

It has been proposed, to resolve those problems, that the surface of the mandrel head be shaped spherically or conically so as uniformly to bear against the riveting force. However, the size and height of such a proposed mandrel head have been so great that the rivets cannot be produced by using conventional nail manufacturing apparatus. Header or like machines that are required to manufacture the proposed rivets must perform several successive steps, thereby involving a higher cost as compared with the nailery machines. Such proposals have not therefore yet been employed for successful and commercial production of cheap blind rivets. In addition, the high heads of those mandrels increase the extent to which the rivet body has to be compressed.

According to one aspect of the invention there is provided a mandrel for use with a rivet body having at an end thereof a flange-shaped head and being of a cylindrical shape as a whole, the mandrel being inserted in the rivet body to form a blind rivet and comprising:
a rod-shaped mandrel body; and
a mandrel head formed integral with the body to have a plane top surface and a lower curved surface, being of a diameter 'D' substantially equal to an outer diameter of the rivet body and being of a height 'H' which corresponds to about 80% - 120% of a diameter 'd' of the mandrel body;
wherein the plane top surface lies perpendicular to an axis of the mandrel body, and a low frustum-shaped protrusion extends upwardly and centrally of and integral with the top surface, with the protrusion having an end surface of a diameter 'd1' slightly greater than the diameter 'd' of the mandrel body, and
wherein the lower surface bearing against an end of the rivet body when it is riveted is of a conical shape or a like shape and decreases in diameter towards the mandrel body so as to exert a self-centering radial force to the mandrel head when it is pressed into an open end of the rivet body.

Such a novel mandrel can uniformly deform a rivet body and will not slip off the body even if a strong external force is imparted thereto. The mandrel is so shaped that it need not increase the length of the rivet body and can easily be manufactured using a nailery machine.

The frustum-shaped protrusion preferably has a lower rim of a diameter 'd2' smaller than the diameter 'D' of the mandrel head, but greater than the diameter of the end surface.

According to another aspect of the invention there is provided apparatus to manufacture a mandrel to be combined with a rivet body to form a blind rivet, the apparatus comprising:
a pair of half dies;
each die having a semicylindrical groove firmly to grip a raw rod from which a body of the mandrel is formed;
an upper conically enlarged recess continuing from the groove;
the enlarged recess increasing in diameter towards an upper end of the die so that a mandrel head can be formed thereby;
a punch disposed above the half dies and capable of being pressed downwards onto a raw rod gripped between the half dies;
a guide disposed on and in contact with the upper end of the die;
a bore formed through the guide to receive the punch; and
a chamfered lower and circumferential edge of the bore, wherein the chamfered edge defines an additional recess to provide a frustum-shaped protrusion which extends upwardly and centrally of and integral with a top surface of the mandrel head.

Thus the mandrel has a head of such a reversed conical or like shape that its tapered surface applies a self-centripetal force to the head. The effective height 'H' of the mandrel head is decreased to fall within the described range, whereby any nailery machines can be used in mass production of the mandrel capable of being caulked uniformly. A reduced volume of the mandrel head due to its decreased height 'H' is compensated with the low conical protrusion formed centrally of the head, so that the head is of a sufficient strength. Further, such a decreased height 'H' will in turn decrease the extent or distance to which the rivet body has to be compressed when it is riveted, and at the same time the finished height of the jutting riveted head will also be lowered.

The apparatus proposed herein enables one-shot pressing of the mandrel heads.

The invention is diagrammatically illustrated by way of example in the accompanying drawings, in which:
Figure 1 is a front elevation of a mandrel according to the invention combined with a rivet body to form a blind rivet, the rivet body being shown in cross-section;
Figure 2(a) is a schematic view showing the blind rivet of Figure 1 before its parts are riveted;
Figure 2(b) is a view similar to Figure 2(a) but after the parts are riveted;
Figure 3(a) is an elevation showing a modified mandrel head;
Figure 3(b) is an elevation showing another modified mandrel head;
Figure 4 is a cross-section of apparatus according to the invention for manufacturing a mandrel;
Figure 5 is a cross-section showing the apparatus of Figure 4 in use forming a mandrel;
Figure 6 is a cross-section showing the apparatus of Figure 4 after forming of a mandrel;
Figure 7(a) is a cross-section of a prior art blind rivet, in a state before being riveted; and
Figure 7(b) is a similar cross-section of a prior art blind rivet, in a state after being riveted.

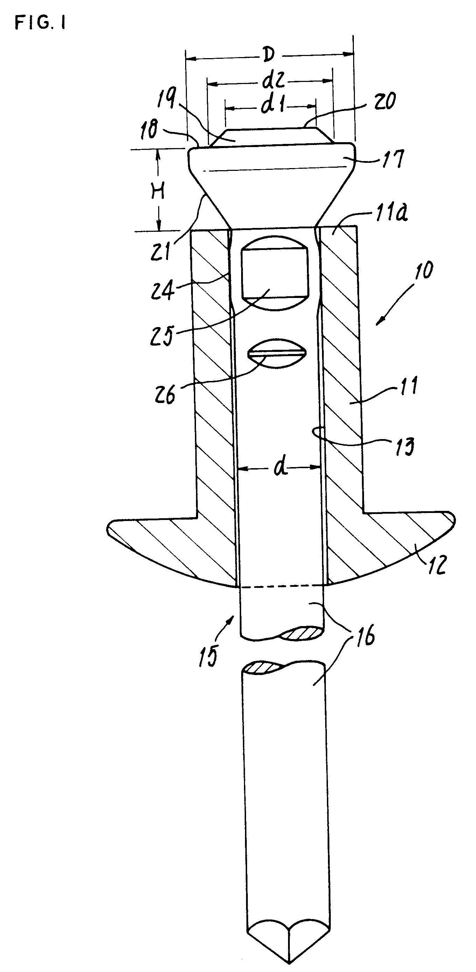

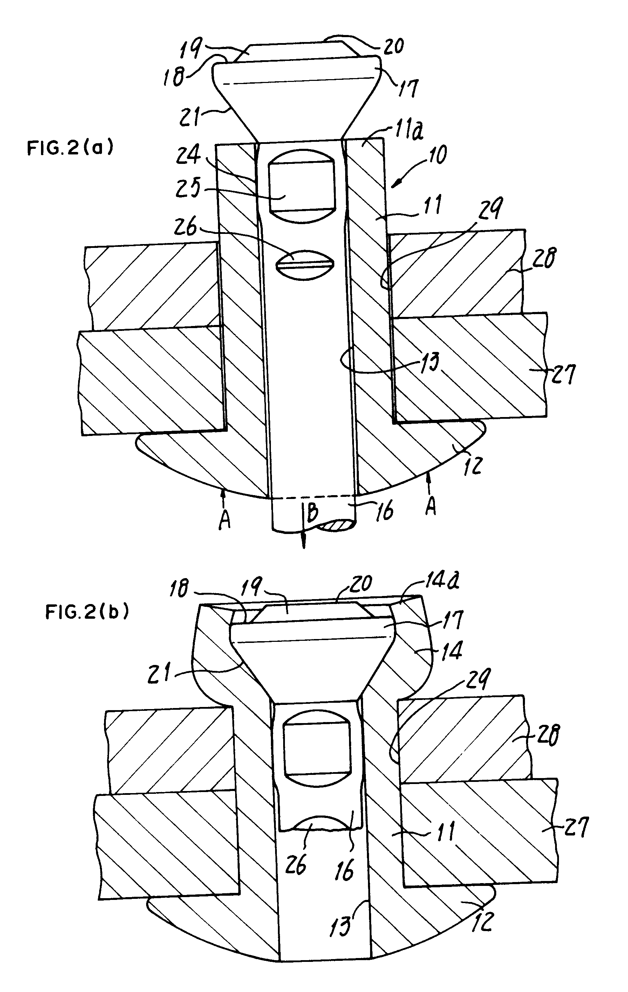

Referring to the drawings, as shown in Figure 1, a blind rivet 10 comprises a mandrel 15 combined with a rivet body 11. The blind rivet 10 is to be used in a manner illustrated in Figure 2.

The rivet body 11 is cylindrical and has, in a manner known from the prior art, a flange-shaped rivet head 12. A bore 13 extends through the rivet body 11, which is made of a relatively soft metal such as an aluminium alloy.

The bore 13 of the rivet body 11 accommodates a rod-shaped body 16 of the mandrel 15. A head 17 integral with the mandrel body 16 is a portion which will in use cause an open end 11a of the rivet body 11 to deform radially outwardly. The diameter 'D' of the mandrel head 17 is substantially equal to the outer diameter of the rivet body. A plane top surface 18 of the mandrel head 17 lies perpendicular to the axis of the rivet body 11. A low frustum-shaped protrusion 19 extends upwardly and centrally of and integral with the top surface 18. The protrusion 19 has an end surface 20, whose diameter 'd1' is slightly greater than the diameter 'd' of the mandrel body 16. However, a maximum allowable diameter 'd2' of a lower rim of the protrusion is smaller than the mandrel head's diameter 'D'. A lower surface 21 of the mandrel head 17 is conical, so that a self-centripetal force is produced when this head presses against the open end 11a of the rivet body 11. The effective height 'H' of the mandrel head 17 is designed as small as possible within a range of 80% - 120% of the mandrel body's diameter 'd'. If the height 'H' is less than 80% of 'd' , then the conical surface 21 will be unable to expand the open end of rivet body in a smooth and even manner. If contrarily the height 'H' is more than 120% of 'd', then it will be impossible for any nailery machines to carry out the one-step pressing of the head 17. The mandrel head's height 'H' included in the described range will thus afford a uniform riveting effect and an inexpensive mass production of such a mandrel in any nailery machines. A reduced volume of the head 17 whose height 'H' is rendered small as defined above will be compensated with the protrusion 19. The compensated volume will thus ensure a sufficient strength for the mandrel head 17 which has to deform the open end of the rivet body 11.

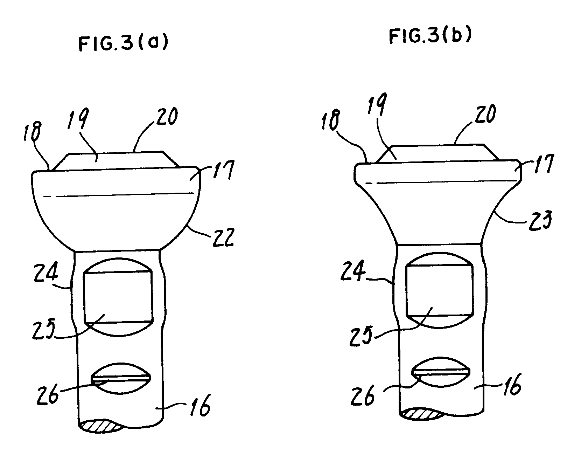

The conical surface 21 of the mandrel head may be replaced with a semi-spherical surface 22 as shown in Figure 3(a), with a concave surface 23 shown in Figure 3(b), or with any other surface not shown but reducing towards the mandrel body, insofar as it produces the self-centripetal effect.

Bulges 24, each located between shallow recesses 25 formed beneath the head 17, allow the mandrel to be temporarily held in the rivet body 11. Deep recesses 26 below the bulges serve as a breaking point where the lower portion of the mandrel body 16 is torn away from the upper portion thereof, after riveting.

Figures 2(a) and 2(b) show the function of the mandrel 15 used in combination with the rivet body 11 to form a blind rivet 10. The rivet 10 will at first be inserted into coaxial apertures 29 in objects 27 and 28 which overlie one another, in a manner shown in Figure 2(a). Then, the rod-shaped mandrel body 16 will forcibly be pulled towards the flange-shaped rivet head 12 in a direction 'B', while at the same time urging upwards the head 12 of the rivet body in an opposite direction 'A'. As a result, the conical surface 21 of the mandrel head 17 caulks (ie., plastically deforms) the rivet body's open end 11a uniformly and produces an expanded portion 14. This expanded portion 14 cooperates with the flange-shaped head 12 to fasten the objects 27 and 28 one to another. When such a fastening action finishes, the mandrel body 16 will simultaneously be broken at its deep recesses 26. An upper round edge 14a of the expanded portion 14 will curve at the same time inwardly towards the top surface 18 of the head 17, so that this head is firmly embraced by the expanded portion 14. The remaining mandrel portion including the head 17 secured in place in this manner withstands well any strong external force applied thereto.

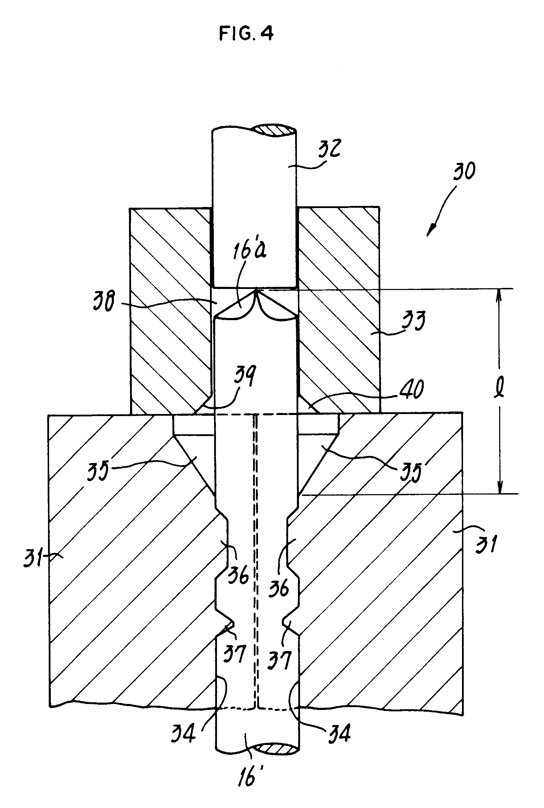

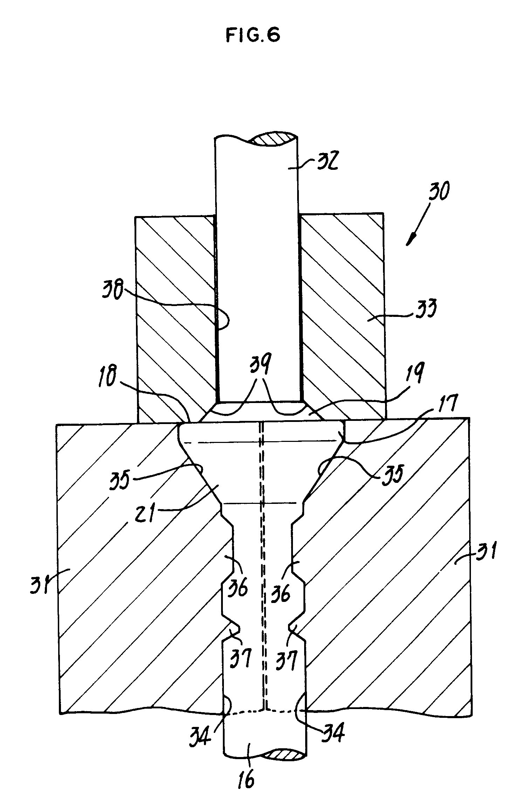

Figures 4 to 6 show an apparatus as well as its operation in sequence, which apparatus will be included in a nailery machine to manufacture the mandrel 15 of the described structure. The apparatus 30 comprises in combination a pair of half dies 31, a pressing punch 32 and a guide 33. The guide 33 protects not only the punch 32 from bending, but also a raw metal rod 16' from bending when firmly gripped by and between the half dies.

Semicylindrical grooves 34 facing one another are respectively formed in the half dies 31 so as to grip a portion of the raw rod 16' from which the mandrel body 16 is formed. An upper conically enlarged recess 35 continues from each groove 34, so that these grooves define a completely cylindrical space in which the mandrel head 17 will be pressed. Additionally, each groove 34 has at its bottom a gentle projection 36 to form the shallow recess 25 and a relatively sharp ridge 37 to form the deep recess 26 in the mandrel body 16. In operation, in a preliminary step, the half dies 31 will come into contact with each other, so that their gentle projections 36 and sharp ridges 37 respectively form the shallow and deep recesses 25 and 26 in the raw rod 16'. The rod 16' will thus be immovably held in place, prior to the formation of the mandrel head 17.

Subsequent to the preliminary step, the punch 32 will press downwards an upper end of the rod or wire 16' to form the head 17. The length 'l' of the exposed rod portion 16' above the bottom of the recesses 35 exceeds the length of the recesses. Thus, a simple pressing by the punch 32 could possibly bend and collapse the rod 16'. Also an upper end 16a' of the raw rod tapers to an edge, like a nail end, since it has roughly been severed in a previous process and accordingly the punch 32 would tend to press the rod 16 eccentrically thereby further bending it. The main purpose of the guide 33 is to protect the rod 16' and the punch 32 from bending. A bore 38 formed through the guide 33 has a chamfered lower circumferential edge 39 which defines an additional recess 40 opened downwards. A spring means not shown urges the guide 33 towards the upper surfaces of the half dies 31.

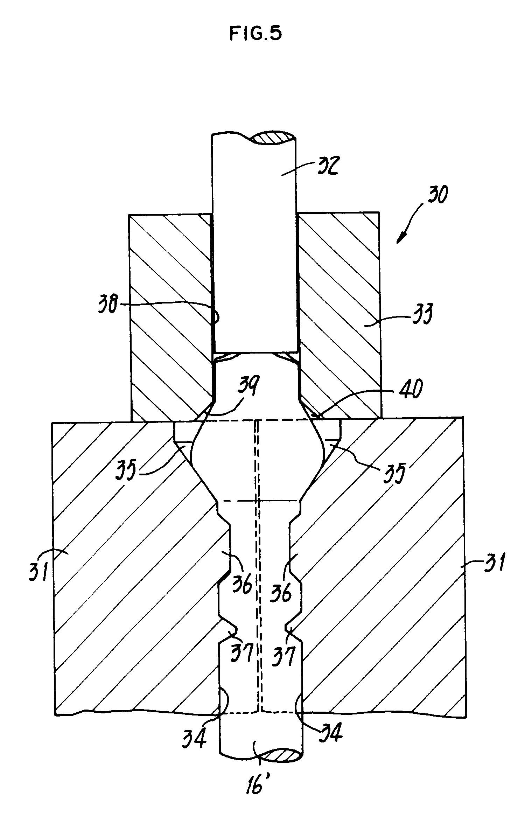

The punch 32 will be driven downwards from a position shown in Figure 4 so as to press at first the end 16a' of the rod portion 16'. At a middle height of the length 'l', the rod portion 16' will be caused to swell as shown in Figure 5. Then the rod portion will further be pressed forcibly to fill the space which is defined by and between the bottom surfaces of the enlarged recesses 35 of the half dies 31 and the lower surface of the guide 33. The mandrel head 17 having a lower conical surface 21 and a flat top surface 18 will be produced in this manner, with the flat top surface 18 lying perpendicular to the axis of the thus formed mandrel. The additional recess 40 in the guide 33 will also be filled at the same time with the pressed and swelled rod portion, whereby the low frustum-shaped protrusion 19 appears centrally of and integral with the top surface 18 of the head 17. An upper surface of the protrusion 19 is substantially flat and plane, though it may have a circular flash embossed by the lower end of the punch. Such a flash will however not affect the actual performance of the blind rivet. It is further advantageous that the chamfered edge 39 of the guide 33 smoothly guides into the enlarged recesses 35 the uppermost portion of the pressed and deforming rod 16. It is sufficient for the punch 32 to make only one stroke, in order to produce the mandrel head 17 of a reliable quality. This head can be free from any crack or eccentricity, because the rod is protected from collapsing during the pressing process. The head 17 and its protrusion 19 are coaxial with the mandrel body 16.

It will now be apparent that the apparatus 30 can be built into a nailery machine to manufacture economically and inexpensively on a large scale the mandrel 15 as shown in Figure 1.

In summary, the mandrel provided herein has the head of the described shape such that the pulling force applied to the mandrel body causes a uniform caulking and deforms the head so as not easily to slip off the rivet body. Since the mandrel head having the conical or other caulking surface is of a reduced height 'H', the riveted length of the rivet body can now be reduced to an economical extent. The mandrel head, after being riveted, will no longer project so excessively as to impair its ornamental value. The frustum-shaped protrusion on the mandrel head acts as a guide smoothly to insert the head into the apertures opened through the objects which are to be fastened one to another.

The apparatus provided herein can be combined successively with any nailery machine to enable the mass production of cheaper mandrels which are advantageous from many aspects as summarised above.

## Claims

1. A mandrel (15) for use with a rivet body (11) having at an end thereof a flange-shaped head (12) and being of a cylindrical shape as a whole, the mandrel (15) being inserted in the rivet body (11) to form a blind rivet (10) and comprising:
a rod-shaped mandrel body (16); and
a mandrel head (17) formed integral with the body (16) to have a plane top surface (18) and a lower curved surface (21), being of a diameter 'D' substantially equal to an outer diameter of the rivet body (11) and being of a height 'H' which corresponds to about 80% - 120% of a diameter 'd' of the mandrel body (16);
wherein the plane top surface (18) lies perpendicular to an axis of the mandrel body (16), and a low frustum-shaped protrusion (19) extends upwardly and centrally of and integral with the top surface (18), with the protrusion (19) having an end surface of a diameter 'd1' slightly greater than the diameter 'd' of the mandrel body (16), and
wherein the lower surface bearing (21) against an end of the rivet body when it is riveted is of a conical shape or a like shape and decreases in diameter towards the mandrel body (16) so as to exert a self-centering radial force to the mandrel head (17) when it is pressed into an open end (11a) of the rivet body (11).

2. A mandrel according to claim 1, wherein the frustum-shaped protrusion (19) has a lower rim of a diameter 'd2' smaller than the diameter 'D' of the mandrel head (17).

3. Apparatus to manufacture a mandrel (15) to be combined with a rivet body (11) to form a blind rivet (10), the apparatus comprising:
a pair of half dies (31);
each die (31) having a semicylindrical groove (34) firmly to grip a raw rod (16') from which a body (16) of the mandrel (15) is formed;
an upper conically enlarged recess (35) continuing from the groove (34);
the enlarged recess (35) increasing in diameter towards an upper end of the die so that a mandrel head (17) can be formed thereby;
a punch (32) disposed above the half dies (31) and capable of being pressed downwards onto a raw rod (16') gripped between the half dies (31);
a guide (33) disposed on and in contact with the upper end of the die;
a bore (38) formed through the guide (33) to receive the punch (32); and
a chamfered lower and circumferential edge (39) of the bore (38), wherein the chamfered edge defines an additional recess (40) to provide a frustum-shaped protrusion (19) which extends upwardly and centrally of and integral with a top surface (18) of the mandrel head (17).

4. Apparatus according to claim 3, wherein each groove (34) has at its bottom and in an intermediate region a gentle projection (36) to form a shallow recess (25) in a mandrel body (16) as well as a sharp ridge (37) to form a deep recess (26) in the mandrel body (16), wherein the shallow recess contributes to form a bulge (24) of such a shape that the mandrel body (16) can be temporarily and firmly held in a rivet body (11), with the deep recess (26) allowing the mandrel body (16) to be broken at the location of the deep recess (26).
